# FASCICULE DE BREVET EUROPEEN

(11) **EP 3 842 275 B1**
(45) Date de publication et mention de la délivrance du brevet: **04.05.2022**
(21) Numéro de dépôt: 20216385.3
(22) Date de dépôt: 22.12.2020
(51) Int. Cl.: B60L 5/38, B60L 5/42, B60L 50/53, B60L 53/14, B60L 53/30, B60M 1/30, B60M 1/36

(54) **DISPOSITIF DE CAPTAGE D ÉNERGIE ÉLECTRIQUE POUR VÉHICULE, NOTAMMENT FERROVIAIRE, ET VÉHICULE, NOTAMMENT FERROVIAIRE, COMPRENANT UN TEL DISPOSITIF**
ELEKTRISCHE ENERGIEAUFNAHMEVORRICHTUNG FÜR EIN FAHRZEUG, INSBESONDERE EIN SCHIENENFAHRZEUG, UND FAHRZEUG, INSBESONDERE SCHIENENFAHRZEUG, DAS EINE SOLCHEN VORRICHTUNG UMFASST
DEVICE FOR CAPTURING ELECTRICAL ENERGY FOR A VEHICLE, IN PARTICULAR A RAILWAY VEHICLE, AND VEHICLE, IN PARTICULAR A RAILWAY VEHICLE, INCLUDING SUCH A DEVICE

(30) Priorité: 23.12.2019 FR 1915434
(43) Date de publication de la demande: 30.06.2021
(73) Titulaire: ALSTOM Transport Technologies, 93400 Saint-Ouen (FR)
(72) Inventeur: DUBAN, Patrick, Serge, Marie, 17000 LA ROCHELLE (FR); VIENNE, Mathieu, 17000 LA ROCHELLE (FR); COULON, Arnaud, Jean, Pierre, 69740 GENAS (FR)
(74) Mandataire: Lavoix

(56) Documents cités:
- EP-A1- 2 275 300
- EP-A1- 3 324 496
- EP-A2- 2 345 554
- EP-B1- 2 345 554
- WO-A1-2016/128939
- JP-B2- 5 322 685
- US-A1- 2016 167 524

## Description

La présente invention concerne un dispositif de captage d'énergie électrique pour un véhicule, notamment ferroviaire, ainsi qu'un véhicule, notamment ferroviaire, comprenant un tel dispositif de captage.

Dans le domaine des véhicules ferroviaires, en particulier pour les véhicules ferroviaires électrifiés, il est commun d'utiliser un véhicule ferroviaire captant l'énergie électrique nécessaire à son exploitation au moyen d'un pantographe comportant un archet avec un ou des frotteurs rigides, qui sont en contact avec une caténaire aérienne, flexible, tirée au-dessus de la voie ferrée sur laquelle circule le véhicule ferroviaire, le retour du courant électrique se faisant par les roues en contact avec les rails.

Dans le cas des véhicules ferroviaires appelés à circuler sur des lignes en zone urbaine, tels que les tramways, de plus en plus d'opérateurs de ces lignes ne souhaitent pas de caténaires aériennes dans leur centre-ville, qui dégradent l'esthétisme des quartiers.

Lorsque les stations d'arrêts ne sont pas trop éloignées les unes des autres, il est connu de munir les véhicules ferroviaires d'un dispositif d'accumulation d'énergie. De tels dispositifs d'accumulation permettent au véhicule de circuler de façon autonome entre les stations et d'être rechargés lors des arrêts en station. Chaque station est munie d'un dispositif de fourniture d'énergie électrique, tel qu'un barreau d'alimentation enterré ou aérien, tandis que chaque véhicule est muni d'un dispositif de captage correspondant. Le dispositif de captage assure, pendant les quelques dizaines de secondes que dure un arrêt en station, la connexion électrique avec le dispositif de fourniture d'énergie, le transfert d'énergie électrique et la déconnexion du dispositif de fourniture d'énergie.

Ces opérations doivent être effectuées en un temps limité et les puissances électriques mises en jeu, de l'ordre du mégawatt, noté MW, entrainent des échauffements localisés au niveau du contact entre le dispositif de captage et le dispositif de fourniture d'énergie, ces échauffements risquant d'endommager les divers équipements lorsque le contact est de mauvaise qualité.

Lorsque l'alimentation en énergie se fait par un barreau rigide d'alimentation, situé par exemple au-dessus du véhicule ferroviaire, ce dernier comprend un dispositif de captage, qui se déploie au-dessus du toit et se replie lors de chaque arrêt en station. Les pantographes d'architecture dite classique, utilisés généralement sur les lignes ferroviaires inter-urbaines ou sur les grandes lignes, présentent un débattement, une force d'appui et une vitesse de déploiement qui les rendent peu compatibles avec une utilisation fréquente et rapide lors de chaque arrêt en station. En outre les frotteurs, rigides, sont en contact du barreau d'alimentation rigide sur une surface limitée, ce qui limite la capacité de passage de courant électrique.

EP 2345554-A2 décrit un système de tresses métalliques fixées soit sur un barreau d'alimentation aérien soit sur les frotteurs d'un pantographe, afin d'améliorer le contact électrique et limiter l'échauffement lors du passage du courant. Un tel système de tresses métalliques est cependant fragile, s'encrasse facilement et génère des coûts de maintenance élevés. Le pantographe utilisé reste a priori d'architecture classique.

C'est à ces problèmes qu'entend plus particulièrement remédier l'invention, en proposant un dispositif de captage d'énergie électrique pour véhicule ferroviaire qui soit robuste, rapide à mettre en œuvre à chaque arrêt en station et qui garantisse un bon transfert de l'énergie électrique.

À cet effet, l'invention concerne un dispositif de captage d'énergie électrique pour véhicule, notamment ferroviaire, le véhicule comprenant un dispositif d'accumulation d'énergie relié électriquement au dispositif de captage et rechargé lors des arrêts du véhicule en station, le dispositif de captage comprenant une embase fixée à une caisse du véhicule et un collecteur mobile par rapport à l'embase. Le collecteur comprend une pluralité de contacts juxtaposés, qui présentent chacun une lame disposée sensiblement orthogonalement à une direction de déplacement du véhicule. Chaque lame présente une surface supérieure orientée vers un organe d'alimentation en électricité extérieur au véhicule, les surface supérieures définissant chacune une zone de contact avec l'organe d'alimentation. Le collecteur est mobile par rapport à l'embase entre une configuration déployée du dispositif de captage, dans laquelle le collecteur est dans une position éloignée de l'embase et est apte à capter de l'énergie électrique en provenance de l'organe d'alimentation, et une configuration rétractée du dispositif de captage, dans laquelle le collecteur est dans une position rapprochée de l'embase et les contacts ne sont pas en contact électrique avec l'organe d'alimentation. Selon l'invention, chaque lame est élastiquement déformable et est prévue pour prendre une configuration relâchée, lorsque le dispositif de captage est en configuration rétractée, et une configuration fléchie, lorsque le dispositif de captage est en configuration déployée. La zone de contact de chaque lame présente, dans la configuration fléchie, une concavité orientée vers l'organe d'alimentation, avec une courbure supérieure à sa courbure en configuration relâchée.

Grâce à l'invention, les contacts, élastiquement déformables, permettent un bon contact électrique avec le barreau d'alimentation tout en étant robustes. Le collecteur s'encrasse peu, est en outre facile à nettoyer.

Selon des aspects avantageux mais non obligatoires de l'invention, un tel support peut incorporer une ou plusieurs des caractéristiques suivantes prises selon toute combinaison techniquement admissible :
- en configuration déployée du dispositif de captage, chaque zone de contact coopère avec une face de contact de l'organe d'alimentation, de manière à ce que le contact entre cette zone de contact et l'organe d'alimentation est un contact surfacique ;
- le collecteur comprend une platine sur laquelle sont fixés les contacts, les contacts étant situés d'un même côté de la platine et comprenant chacun un profilé métallique replié selon une forme de C, avec deux arrondis du C en forme d'arc de cercle, les arrondis étant d'une part reliés l'un à l'autre par la lame correspondante et, d'autre part, liés à la platine, de manière à ce que, en configuration rétractée du dispositif de captage, un plan de contact dans lequel sont situées les zones de contact des lames est parallèle à la platine ;
- les contacts sont réalisés en alliage de cuivre, de préférence en bronze phosphoreux ;
- le collecteur comprend entre huit et seize contacts, de préférence entre dix et quatorze contacts, de préférence encore douze contacts ;
- le dispositif de captage comprend, en outre, un actionneur, qui est configuré pour piloter les déplacements du collecteur entre les positions éloignée ou rapprochée de l'embase ;
- l'actionneur est pourvu d'un dispositif de régulation configuré pour que, en configuration déployée du dispositif de captage, l'intensité de la force exercée par le collecteur sur l'organe d'alimentation est égale à une valeur de consigne, et
- la valeur de consigne est comprise entre 150 N et 350 N, de préférence comprise entre 200 N et 300 N, de préférence encore sensiblement égale à 250 N.

L'invention concerne aussi un véhicule, notamment ferroviaire, qui comprend un dispositif de captage d'énergie électrique et un dispositif d'accumulation d'énergie relié électriquement au dispositif de captage, dans lequel le dispositif de captage est tel que défini précédemment.

Avantageusement, le véhicule est destiné à s'arrêter à une station où l'organe d'alimentation est situé au-dessus du véhicule, le dispositif de captage étant fixé à la caisse du véhicule et étant situé entre un toit du véhicule et l'organe d'alimentation lorsque le véhicule est arrêté en station.

L'invention sera mieux comprise, et d'autres avantages de celle-ci apparaîtront plus clairement à la lumière de la description qui va suivre, d'un mode de réalisation d'un dispositif de captage d'énergie électrique pour véhicule, notamment ferroviaire, et d'un véhicule, notamment ferroviaire, conformes à son principe, donnée uniquement à titre d'exemple et faite en référence aux dessins annexés, dans lesquels :
- [Fig 1] la figure 1 est une vue schématique de côté d'un véhicule conforme à l'invention comprenant un dispositif de captage d'énergie électrique conforme à l'invention ;
- [Fig 2] la figure 2 est une vue en perspective du dispositif de captage d'énergie électrique de la figure 1, représenté dans une première configuration, et
- [Fig 3] la figure 3 est une vue analogue à la figure 2, le dispositif de captage d'énergie électrique étant représenté dans une deuxième configuration.

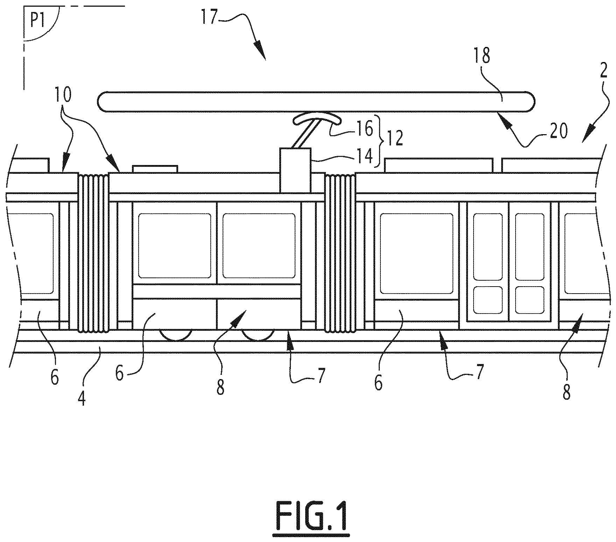

Un véhicule 2 est représenté sur la figure 1. Le véhicule 2 est destiné au transport de passagers et circule sur un trajet qui comprend des stations d'arrêts, où les passagers peuvent monter ou descendre du véhicule 2.

Le véhicule 2 est un véhicule à propulsion électrique semi-autonome en énergie, c'est-à-dire que le véhicule 2 comprend un dispositif de stockage d'énergie, qui lui permet de se déplacer d'une station d'arrêt jusqu'à la station suivante sans recourir à une alimentation extérieure en énergie électrique. Le dispositif de stockage est rechargé lors des arrêts du véhicule 2 en station, pendant l'échange de voyageurs. De façon non limitative, le dispositif de stockage d'énergie, non représenté et embarqué sur le véhicule 2, est propre à inclure des batteries ou des super-condensateurs.

Dans l'exemple illustré, le véhicule 2 est un véhicule ferroviaire, destiné à rouler sur une voie ferrée comprenant des rails 4 parallèles entre eux. Dans l'exemple illustré, les rails 4 sont supposés être rectilignes, définissant une direction longitudinale des rails 4, qui est aussi une direction de déplacement du véhicule 2. Les rails 4 sont supposés être ici horizontaux et la voie ferrée définit un plan horizontal.

Par commodité, on définit un plan longitudinal P1 comme étant un plan parallèle à la direction longitudinale des rails 4 et vertical. On définit aussi un plan transversal P2 comme étant un plan orthogonal au plan longitudinal P1 et vertical.

Le véhicule 2 est ici un tramway, composé de plusieurs caisses 6 liées les unes aux autres. Les caisses 6 comprennent chacune un plancher 7, deux parois latérales 8 et un toit 10. Le plancher 7 est horizontal. Les parois latérales 8 sont disposées en regard l'une de l'autre parallèlement au plan P1 et présentent des ouvertures, telles que des fenêtres ou des portes. Le toit 10 est parallèle au plancher 7 et relie les parois latérales 8 en partie supérieure de chaque caisse 6. Le plancher 7, les parois latérales 8 et le toit 10 délimitent ensemble un volume intérieur de chaque caisse 6, qui est séparé de l'extérieur des caisses 6.

Outre le dispositif de stockage d'énergie, le véhicule 2 comprend aussi divers équipements nécessaires à l'exploitation du véhicule 2. De façon non limitative, ces équipements peuvent inclure des moteurs, des appareils de traitements de l'énergie électrique, des appareils de contrôle et de sécurité, etc. Ces équipements sont généralement agencés sous le plancher 7, c'est-à-dire entre le plancher 7 et le sol, ou au-dessus du toit 10.

Le véhicule 2 comprend aussi un dispositif de captage d'énergie électrique 12. Le dispositif de captage 12 est relié électriquement au dispositif d'accumulation d'énergie. Le dispositif de captage 12 comprend une embase 14, qui est fixée à une des caisses 6 à l'extérieur du véhicule 2, et un collecteur 16.

Dans l'exemple illustré, l'embase 14 est montée sur le toit 10 de l'une des caisses 6 du véhicule 2. Le collecteur 16 est mobile par rapport à l'embase 14 entre une position éloignée de l'embase 14, et une position rapprochée de l'embase 14, dans laquelle le collecteur 16 est plus proche de la caisse 6 que dans la position éloignée.

Sur la figure 1, le véhicule 2 est représenté à l'arrêt dans une station 17. La station 17 comprend un barreau d'alimentation 18, qui est prévu pour alimenter en énergie le véhicule 2 et recharger en énergie le dispositif d'accumulation d'énergie au cours de l'arrêt du véhicule 2 dans la station 17. Le barreau d'alimentation 18, qui est un exemple d'organe d'alimentation, ne fait pas partie du véhicule 2, mais est nécessaire pour expliquer le fonctionnement de l'invention.

Le barreau d'alimentation 18 est un barreau rigide, qui est fixe par rapport aux rails 4 de la voie ferrée. Le barreau d'alimentation 18 s'étend dans sa longueur parallèlement aux rails 4. Le barreau d'alimentation 18 est situé à l'extérieur des caisses 6, à distance au-dessus des toits 10 des différentes caisses 6.

Le barreau d'alimentation 18 est disposé de manière que le collecteur 16 est électriquement connecté au barreau d'alimentation 18 lorsque le collecteur 18 est en position éloignée de l'embase 14. Un courant électrique passe alors entre le barreau d'alimentation 18 et le collecteur 16, pour alimenter en énergie électrique les divers équipements du véhicule 2 et, en particulier, recharger le dispositif de stockage d'énergie.

Le barreau d'alimentation 18 comprend une face de contact 20. Dans l'exemple illustré, la face de contact 20 est orientée vers le véhicule 2, plus précisément la face de contact 20 est située en regard du toit 10 de la caisse 6 qui porte le dispositif de captage 12 d'énergie électrique.

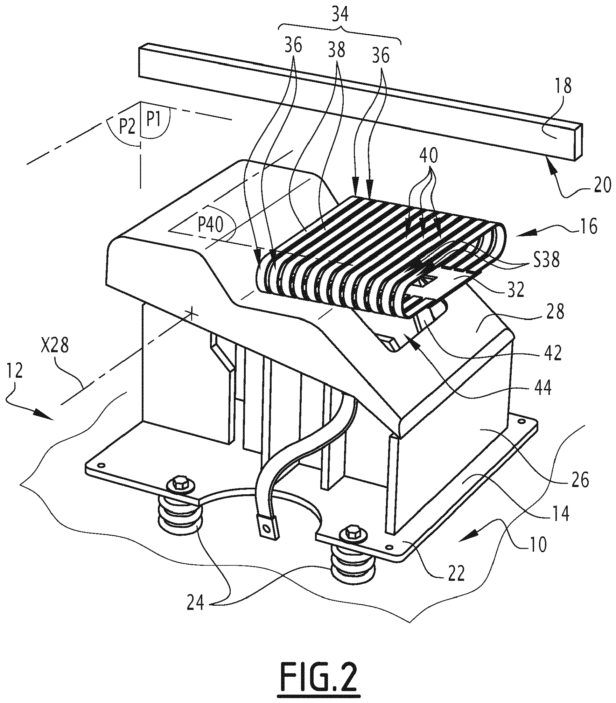

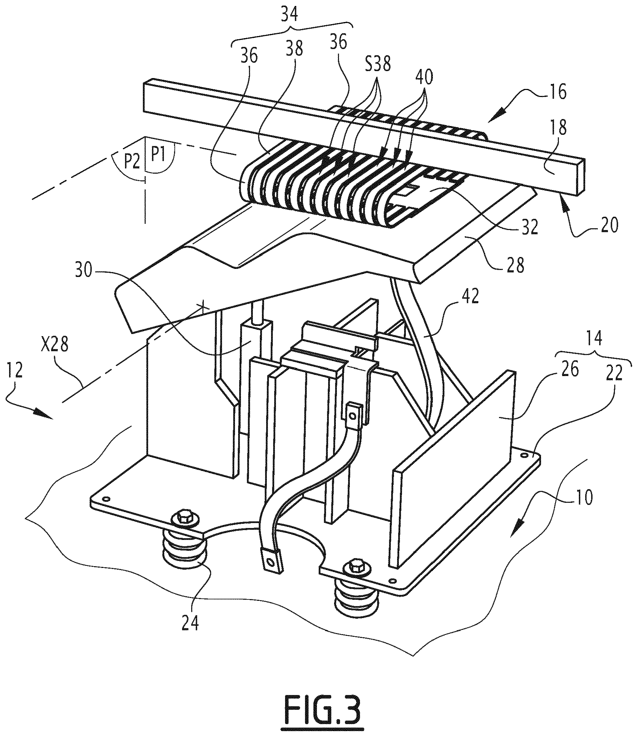

On décrit à présent plus en détail le dispositif de captage d'énergie électrique 12 à l'aide des figures 2 et 3.

Sur la figure 2, le collecteur 16 est représenté dans sa position rapprochée de l'embase 14 et le dispositif de captage 12 est dans une configuration dite « rétractée », dans laquelle le collecteur 16 n'est pas en contact avec le barreau d'alimentation 18. Sur la figure 3, le collecteur 16 est en position éloignée de l'embase 14 et est au contact du barreau d'alimentation 18. Le dispositif de captage 12 d'énergie électrique est alors dans une configuration dite « déployée ».

L'embase 14 est ici réalisée par un assemblage de plaques en résine, chevillées et collées les unes aux autres. L'embase 14 comprend un socle 22 et une structure de montage 26. Le socle 22 est ménagé dans une plaque et est monté sur le toit 10 d'une des caisses 6 du véhicule 2, parallèlement à ce toit 10, par l'intermédiaire d'isolateurs 24. La structure de montage 26 est ménagée sur une face du socle 22 orientée à l'opposé du toit 10. La structure de montage 26 permet de fixer et d'assembler les divers éléments du dispositif de captage 12, comme détaillé plus loin dans la suite de la description.

Le dispositif de captage 12 comprend, en outre, un bras 28. Le bras 28 est monté pivotant par rapport à l'embase 14 autour d'un axe X28, qui est orthogonal au plan longitudinal P1. Dans la configuration rétractée du dispositif de captage 12, illustrée sur la figure 2, le bras 28 est dans une position dite basse, tandis que dans la position déployée du dispositif de captage 12, illustrée sur la figure 3, le bras 28 est dans une position dite haute. Les mouvements du bras 28 entre les positions haute et basse sont pilotés par un actionneur 30. L'actionneur 30 est ici un vérin, avec un corps lié à l'embase 14 et un piston lié au bras 28.

Dans l'exemple illustré, l'actionneur 30 est avantageusement un vérin électrique, qui est configuré pour piloter les déplacements du bras 28.

Le collecteur 16 est cinématiquement lié au bras 28 au moyen d'une articulation, non représentée. On comprend que l'actionneur 30 pilote aussi les mouvements du collecteur 16. Autrement dit l'actionneur 30 pilote la configuration du dispositif de captage 12.

Avantageusement, l'actionneur 30 comprend un dispositif de régulation électronique, non représenté, qui est configuré pour réguler la vitesse de déplacement du collecteur 16 entre les positions rapprochées et éloignées, de manière que le temps nécessaire au changement de configuration du dispositif de captage 12 entre les configurations rétractées et déployées prennent le moins de temps possible, tout en évitant les chocs au moment où le collecteur 16 rentre en contact avec le barreau d'alimentation 18, ou au moment où le collecteur 16 revient en position rapprochée.

On décrit à présent la structure du collecteur 16.

Le collecteur 16 comprend une platine 32 et une pluralité de contacts 34, qui sont fixés à la platine 32. La platine 32 présente ici une forme de plaque rectangulaire, qui s'étend dans sa longueur parallèlement à la direction longitudinale du véhicule 2 et est orthogonale au plan longitudinal P1. Les contacts 34, qui sont dans l'exemple illustré au nombre de 12, sont situés d'un même côté de la platine 32, sont chacun situés dans un plan parallèle au plan transversal P2. Les contacts 34 comprennent chacun un profilé métallique, de section rectangulaire, replié selon une forme de C, le C présentant deux arrondis 36 en forme d'arc de cercle. Les arrondis 36 d'un contacts 34 sont reliés entre eux, à une première extrémité, par une lame 38. Les arrondis 36 sont reliés, à une deuxième extrémité, à un rebord respectif de la platine 32.

Les contacts 34 sont ainsi disposés parallèlement les uns aux autres, autrement dit juxtaposés. En particulier, les lames 38 sont parallèles les unes aux autres, chacune située dans un plan parallèle au plan transversal P2. Les lames 38 sont ainsi disposée orthogonalement à une direction de déplacement du véhicule 2. Chaque lame 38 présente une surface supérieure S38, orientée à l'opposé de la platine 32 vers le barreau d'alimentation 18, c'est-à-dire vers le haut sur les figures.

Dans la configuration rétractée du dispositif de captage, illustrée sur la figure 2, les lames 38 ne sont au contact d'aucun élément extérieur et les surfaces supérieures S38 sont planes et orientées vers le haut. Les surfaces supérieures définissent ensemble un plan de contact P40, qui est parallèle à la platine 32.

L'articulation entre le collecteur 16 et le bras 28 est avantageusement configurée pour que, lorsque le collecteur 16 est dans une position différente de la position rapprochée, la platine 32 reste parallèle à la position de la platine 32 dans la position rapprochée du collecteur 16.

Dans la configuration déployée du dispositif de captage 12, le collecteur 16 est en appui sur le barreau d'alimentation 18, sous l'effet de l'actionneur 30. Pour chaque contacts 34, on définit une zone de contact 40 comme étant une portion de la surface supérieure S38 en appui sur la face de contact 20. On comprend que l'intensité de la force exercée par le collecteur 16 sur le barreau d'alimentation 18 est déterminée par l'actionneur 30.

L'énergie électrique captée par le dispositif de captage 12 est transmise aux autres équipements du véhicule 2 par l'intermédiaire d'un conducteur flexible 42, qui passe par une ouverture 44 du bras 28. Dans l'exemple illustré, le conducteur flexible 42 est une tresse métallique.

Avantageusement, le dispositif de régulation de l'actionneur 30 est aussi configuré pour réguler l'intensité de la force exercée par le collecteur 16 sur le barreau d'alimentation 18 lorsque le dispositif de captage 12 est en configuration déployée, en particulier pour que l'intensité de la force d'appui du collecteur 16 sur le barreau 18 reste stable et soit égale à une première valeur de consigne. On comprend que si la force d'appui est trop faible, le contact électrique entre les contacts 34 et le barreau d'alimentation 18 risque d'être mauvais, ce qui peut entraîner des échauffements localisés des contacts 34 et risque d'endommager le collecteur 16. À l'inverse, si la force d'appui du collecteur 16 sur le barreau d'alimentation 18 est trop importante, le barreau d'alimentation 18 et/ou des éléments du dispositif de captage 12 risquent d'être endommagés. En particulier, les contacts 34 risque d'être déformés plastiquement, c'est-à-dire de façon permanente.

En pratique, la valeur de consigne de l'intensité de la force d'appui, exprimée en Newton, est comprise entre 150 N et 350 N. De préférence, la valeur de consigne est comprise entre 200 N et 300 N, de préférence encore la valeur de consigne est sensiblement égale à 250 N.

Les lames 38 des contacts 34 sont conçues pour se déformer élastiquement lorsque le collecteur 16 est en appui sur le barreau d'alimentation 18, dans une configuration dite « fléchie » des lames 8. Lorsque les lames 38 ne sont pas en appui sur le barreau 18, les lames 38 sont dans une configuration dite « relâchée ».

Lorsqu'une lame 38 est en configuration fléchie au contact de la face de contact 20 du barreau d'alimentation 18, la zone de contact 40 est incurvée en direction de la face de contact 20. Autrement dit, la zone de contact 40 est incurvée et concave, avec sa concavité orientée vers le barreau d'alimentation 18.

Ceci tend à élargir la surface de contact entre la lame 38 et la face de contact 20 du barreau d'alimentation 18, ce qui favorise le passage du courant électrique et réduit les risques d'échauffements.

Lorsqu'une lame 38 est en configuration relâchée, la lame 38 est moins incurvée qu'en configuration fléchie. Autrement dit, la courbure de la zone de contact 40 en configuration fléchie est supérieure à sa courbure en configuration relâchée.

Par soucis de clarté, on définit la courbure d'une surface comme étant inversement proportionnelle au rayon de courbure. Ainsi, une surface très incurvée présente une courbure forte, mais un rayon de courbure petit.

La surface supérieure S38 de chaque lame 38 en configuration fléchie est une portion de cylindre, dont la génératrice est une droite parallèle à la direction de déplacement du véhicule 2.En particulier, lorsque la face de contact 20 du barreau d'alimentation 18 est convexe, c'est-à-dire bombée en direction des contacts 34, la face de contact 20 au voisinage de chaque lame 38 est elle aussi une portion de cylindre, dont la génératrice est une droite parallèle à la direction de déplacement du véhicule 2.

Les zones de contact 40, qui sont concaves sous l'effet de la déformation élastique, coopèrent avec la face de contact 20, convexe, de manière à former avec le barreau d'alimentation 18 un contact surfacique au niveau de chaque zone de contact 40. Un contact surfacique permet, à échauffement égal, le passage d'un courant d'intensité supérieure à un contact linéique tel que rencontré dans le cas d'un barreau d'alimentation 18 à surface plane ou convexe et d'un contact 34 indéformable.

Les contacts 34 sont ainsi réalisés en un matériau qui est un bon conducteur électrique et présente une bonne capacité à se déformer élastiquement. En pratique, les contacts 34 sont réalisés en un alliage de cuivre. De préférence, les contacts sont réalisés en bronze phosphoreux.

L'association du dispositif de régulation de l'actionneur 30 et des contacts 34, déformables élastiquement, permet d'accommoder les défauts géométriques de la face de contact 20 du barreau d'alimentation 18, mais aussi d'accommoder les écarts de positionnement relatif entre le barreau d'alimentation 18 et le véhicule 2, afin de maintenir un bon contact électrique entre les contacts 34 et le barreau d'alimentation 18.

À titre d'exemple de cause d'écart de positionnement, lorsque le véhicule 2 est arrêté en station, la montée et la descente des passagers peut entraîner un mouvement de roulis de la caisse 6 qui porte le dispositif de captage 12. Une autre cause possible d'écart de positionnement est l'usure des certaines pièces du véhicule 2, telle que l'usure des roues, ou bien un défaut du système de suspension du véhicule 2.

On comprend qu'augmenter le nombre de contacts 34 permet d'augmenter la capacité totale de passage d'un courant électrique. Cependant un nombre de contacts 34 trop important entraine une augmentation du poids du collecteur 16, ce qui n'est pas souhaitable.

D'un autre côté, un nombre réduit de contacts 34 demande des lames 38 plus large, afin de maintenir la capacité totale de passage d'un courant électrique. Or des lames 38 trop larges sont moins accommodantes pour compenser les défauts géométriques de la face de contact 20 et/ou les écarts de positionnement relatifs entre le barreau 18 et le véhicule 2.

En pratique, le nombre de contacts 34 est compris entre huit et seize. De préférence, le nombre de contacts 34 est compris entre dix et quatorze. Un nombre de contacts 34 égal à douze, tel qu'illustré sur les figures 2 et 3, donne de bons résultats.

Dans l'exemple illustré, le barreau d'alimentation 18 est un rail aérien, situé au-dessus du véhicule 2. En variante non représentée, un barreau d'alimentation du type « troisième rail » peut être prévu au niveau du sol, auquel cas un dispositif de captage d'énergie électrique du type du dispositif de captage 12 est prévu sous une des caisses 6.

Lorsque le véhicule 2 est un véhicule ferroviaire, un seul dispositif de captage 12 est nécessaire car le retour de courant se fait par les rails 4. En variante non représentée, plusieurs dispositifs de captage du type du dispositif de captage 12 peuvent être prévus, en particulier lorsque le véhicule ne circule pas sur des rails mais comprend des pneus, comme c'est le cas pour les bus ou pour les « tramways sur pneus ».

Selon une variante non représentée de l'invention, le véhicule 2 peut être équipé de plusieurs dispositifs de captage d'énergie électrique 12, répartis sur sa longueur. La longueur du barreau d'alimentation 18 ou le nombre de tels barreaux est alors adapté en conséquence.

Le mode de réalisation et les variantes mentionnés ci-dessus peuvent être combinés entre eux pour générer de nouveaux modes de réalisation de l'invention.

## Revendications

1. Dispositif de captage (12) d'énergie électrique pour véhicule (2), notamment ferroviaire, le véhicule comprenant un dispositif d'accumulation d'énergie relié électriquement au dispositif de captage et rechargé lors des arrêts du véhicule en station, le dispositif de captage comprenant une embase (14), fixée à une caisse (6) du véhicule, et un collecteur (16) mobile par rapport à l'embase, dans lequel :
- le collecteur comprend une pluralité de contacts (34) juxtaposés, qui présentent chacun une lame (38) disposée sensiblement orthogonalement à une direction de déplacement du véhicule, chaque lame présentant une surface supérieure (S38) orientée vers un organe d'alimentation (18) en électricité extérieur au véhicule (2), les surfaces supérieures définissant chacune une zone de contact (40) avec l'organe d'alimentation,
- le collecteur (16) est mobile par rapport à l'embase (14), entre une configuration déployée du dispositif de captage (12), dans laquelle le collecteur est dans une position éloignée de l'embase et le collecteur est apte à capter de l'énergie électrique en provenance de l'organe d'alimentation (18), et une configuration rétractée du dispositif de captage (12), dans laquelle le collecteur est dans une position rapprochée de l'embase et les contacts (34) ne sont pas en contact électrique avec l'organe d'alimentation (18),
**caractérisé**
**en ce que** chaque lame (38) est élastiquement déformable et est prévue pour prendre une configuration relâchée, lorsque le dispositif de captage (12) est en configuration rétractée, et une configuration fléchie, lorsque le dispositif de captage est en configuration déployée, et en ce que la zone de contact (40) de chaque lame (38) présente, dans la configuration fléchie, une concavité orientée vers l'organe d'alimentation, avec une courbure supérieure à sa courbure en configuration relâchée.

2. Dispositif de captage (12), selon la revendication précédente, **caractérisé en ce qu'**en configuration déployée du dispositif de captage, chaque zone de contact (40) coopère avec une face de contact (20) de l'organe d'alimentation (18), de manière à ce que le contact entre cette zone de contact (40) et l'organe d'alimentation (18) est un contact surfacique.

3. Dispositif de captage (12), selon l'une quelconque des revendications précédentes, **caractérisé en ce que** le collecteur (16) comprend une platine (32) sur laquelle sont fixés les contacts (34), les contacts (34) étant situés d'un même côté de la platine et comprenant chacun un profilé métallique replié selon une forme de C, avec deux arrondis (36) du C en forme d'arc de cercle, les arrondis étant d'une part reliés l'un à l'autre par la lame correspondante (38) et, d'autre part, liés à la platine (32), de manière à ce que, en configuration rétractée du dispositif de captage (12), un plan de contact (P40) dans lequel sont situées les zones de contact (40) des lames (38) est parallèle à la platine (32).

4. Dispositif de captage (12), selon l'une quelconque des revendications précédentes, **caractérisé en ce que** les contacts (34) sont réalisés en alliage de cuivre, de préférence en bronze phosphoreux.

5. Dispositif de captage (12), selon l'une quelconque des revendications précédentes, **caractérisé en ce que** le collecteur (16) comprend entre huit et seize contacts (34), de préférence entre dix et quatorze contacts, de préférence encore douze contacts.

6. Dispositif de captage (12), selon l'une quelconque des revendications précédentes, **caractérisé en ce que** le dispositif de captage comprend, en outre, un actionneur (30), qui est configuré pour piloter les déplacements du collecteur (16) entre les positions éloignée ou rapprochée de l'embase (14).

7. Dispositif de captage (12), selon la revendication précédente, **caractérisé en ce que** l'actionneur (30) est pourvu d'un dispositif de régulation configuré pour que, en configuration déployée du dispositif de captage, l'intensité de la force exercée par le collecteur (16) sur l'organe d'alimentation (18) est égale à une valeur de consigne.

8. Dispositif de captage (12), selon la revendication précédente, **caractérisé en ce que** la valeur de consigne est comprise entre 150 N et 350 N, de préférence comprise entre 200 N et 300 N, de préférence encore sensiblement égale à 250 N.

9. Véhicule (2), notamment ferroviaire, comprenant un dispositif de captage (12) d'énergie électrique et un dispositif d'accumulation d'énergie relié électriquement au dispositif de captage, **caractérisé en ce que** le dispositif de captage (12) est selon l'une quelconque des revendications précédentes.

10. Véhicule (2), notamment ferroviaire, selon la revendication précédente, **caractérisé en ce que** le véhicule est destiné à s'arrêter à une station (17) où l'organe d'alimentation (18) est situé au-dessus du véhicule, le dispositif de captage (12) étant fixé à la caisse (6) du véhicule et étant situé entre un toit (10) du véhicule et l'organe d'alimentation (18) lorsque le véhicule est arrêté en station.

## Patentansprüche

1. Aufnahmevorrichtung (12) für elektrische Energie für ein Fahrzeug (2), insbesondere ein Schienenfahrzeug, das Fahrzeug umfassend eine Energiespeichervorrichtung umfasst, die elektrisch mit der Aufnahmevorrichtung verbunden ist und bei Halt des Fahrzeugs in einer Station aufgeladen wird, die Aufnahmevorrichtung umfassend einen Sockel (14), der an einem Wagenkasten (6) des Fahrzeugs befestigt ist, und einen Abnehmer (16), der in Bezug auf den Sockel beweglich ist, in dem:
- der Abnehmer umfassend eine Vielzahl von nebeneinander angeordneten Kontakten (34), die jeweils eine Lamelle (38) aufweisen, die im Wesentlichen orthogonal zu einer Fahrtrichtung des Fahrzeugs angeordnet ist, wobei jede Lamelle eine obere Fläche (S38) aufweist, die zu einem Versorgungsorgan (18) von Strom außerhalb des Fahrzeugs (2) ausgerichtet ist, wobei die oberen Flächen jeweils einen Kontaktbereich (40) mit dem Versorgungsorgan definieren,
- wobei der Abnehmer (16) in Bezug auf den Sockel (14) zwischen einer ausgefahrenen Konfiguration der Aufnahmevorrichtung (12), in der Abnehmer in einer von dem Sockel entfernten Position ist und der Abnehmer geeignet ist, elektrische Energie von dem Versorgungsorgan (18) aufzunehmen, und einer eingezogene Konfiguration der Aufnahmevorrichtung (12), in dem Abnehmer in einer Position nahe dem Sockel ist und die Kontakte (34) nicht in elektrischem Kontakt mit dem Versorgungsorgan (18) sind, beweglich ist,
**gekennzeichnet**
**dadurch, dass** jede Lamelle (38) elastisch verformbar ist und bereitgestellt ist, um eine entspannte Konfiguration einzunehmen, wenn die Aufnahmevorrichtung (12) in einer eingezogenen Konfiguration ist, und eine gebogene Konfiguration, wenn die Aufnahmevorrichtung in einer ausgefahrenen Konfiguration ist, und dass der Kontaktbereich (40) von jeder Lamelle (38) in der gebogenen Konfiguration eine zum Versorgungsorgan hin gerichtete Konkavität mit einer Krümmung aufweist, die größer ist als ihre Krümmung in der entspannten Konfiguration.

2. Aufnahmevorrichtung (12), nach dem vorherigen Anspruch, **dadurch gekennzeichnet, dass** in der ausgefahrenen Konfiguration der Aufnahmevorrichtung jeder Kontaktbereich (40) mit einer Kontaktfläche (20) des Versorgungsorgans (18) zusammenwirkt, sodass der Kontakt zwischen diesem Kontaktbereich (40) und dem Versorgungsorgan (18) ein Flächenkontakt ist.

3. Aufnahmevorrichtung (12), nach einem der vorherigen Ansprüche, **dadurch gekennzeichnet, dass** der Abnehmer (16) eine Platine (32) umfasst, auf der die Kontakte (34) befestigt sind, wobei sich die Kontakte (34) auf derselben Seite der Platine befinden und jeweils ein Metallprofil umfassen, das in eine C-Form gebogen ist, mit zwei Rundungen (36) des C in Form eines Kreisbogens, wobei die Rundungen einerseits durch die entsprechende Lamelle (38) miteinander verbunden sind und andererseits mit der Platine (32) verbunden sind, sodass in der eingefahrenen Konfiguration der Aufnahmevorrichtung (12) eine Kontaktebene (P40), in der sich die Kontaktbereiche (40) der Lamellen (38) befinden, parallel zu der Platine (32) ist.

4. Aufnahmevorrichtung (12), nach einem der vorherigen Ansprüche, **dadurch gekennzeichnet, dass** die Kontakte (34) aus einer Kupferlegierung, vorzugsweise aus Phosphorbronze, hergestellt sind.

5. Aufnahmevorrichtung (12), nach einem der vorherigen Ansprüche, **dadurch gekennzeichnet, dass** der Abnehmer (16) zwischen acht und sechzehn Kontakte (34), vorzugsweise zwischen zehn und vierzehn Kontakte, bevorzugter zwölf Kontakte, umfasst.

6. Aufnahmevorrichtung (12), nach einem der vorherigen Ansprüche, **dadurch gekennzeichnet, dass** die Aufnahmevorrichtung ferner einen Aktuator (30) umfasst, der konfiguriert ist, um die Bewegungen des Abnehmers (16) zwischen der von dem Sockel (14) entfernten oder angenäherten Position zu steuern.

7. Aufnahmevorrichtung (12), nach dem vorherigen Anspruch, **dadurch gekennzeichnet, dass** der Aktuator (30) mit einer Regelvorrichtung versehen ist, die konfiguriert ist, damit die Stärke der Kraft, die von dem Abnehmer (16) auf das Versorgungsorgan (18) ausgeübt wird, in der ausgefahrenen Konfiguration der Aufnahmevorrichtung gleich wie ein Sollwert ist.

8. Aufnahmevorrichtung (12), nach dem vorherigen Anspruch, **dadurch gekennzeichnet, dass** der Sollwert zwischen 150 N und 350 N, vorzugsweise zwischen 200 N und 300 N, bevorzugter im Wesentlichen gleich wie 250 N ist.

9. Fahrzeug (2), insbesondere Schienenfahrzeug, umfassend eine Aufnahmevorrichtung (12) elektrischer Energie und eine Energiespeichervorrichtung, die elektrisch mit der Aufnahmevorrichtung verbunden ist, **dadurch gekennzeichnet, dass** die Aufnahmevorrichtung (12) gemäß einem der vorherigen Ansprüche ist.

10. Fahrzeug (2), insbesondere Schienenfahrzeug, nach dem vorherigen Anspruch, **dadurch gekennzeichnet, dass** das Fahrzeug dazu bestimmt ist, an einer Station (17) anzuhalten, an der sich das Versorgungsorgan (18) über dem Fahrzeug befindet, wobei die Aufnahmevorrichtung (12) an dem Wagenkasten (6) des Fahrzeugs befestigt ist und sich zwischen einem Dach (10) des Fahrzeugs und dem Versorgungsorgan (18) befindet, wenn das Fahrzeug an der Station angehalten ist.

## Claims

1. An electrical energy collection device (12) for a vehicle (2), in particular a railway vehicle, the vehicle comprising an energy storage device electrically connected to the collection device and recharged when the vehicle stops in a station, the collection device comprising a base (14), secured to a body (6) of the vehicle, and a collector (16) which is movable with respect to the base, wherein:
- the collector comprises a plurality of juxtaposed contacts (34), each of which has a blade (38) disposed substantially orthogonally to a direction of travel of the vehicle, each blade having an upper surface (S38) facing an electricity supply member (18) external to the vehicle (2), the upper surfaces each defining a contact area (40) with the supply member,
- the collector (16) is movable with respect to the base (14), between an extended configuration of the collection device (12), in which the collector is in a position away from the base and the collector is able to collect electrical energy from the supply member (18), and a retracted configuration of the collection device (12), in which the collector is in a position close to the base and the contacts (34) are not in electrical contact with the supply member (18),
ch aracterized
in that each blade (38) is resiliently deformable and is arranged to assume a relaxed configuration when the collection device (12) is in the retracted configuration, and a bent configuration when the collection device is in the extended configuration, and in that the contact area (40) of each blade (38) has, in the bent configuration, a concavity facing the supply member with a curvature greater than its curvature in the relaxed configuration.

2. The collection device (12) according to the preceding claim, **characterized in that** in the extended configuration of the collection device, each contact zone (40) mates with a contact face (20) of the supply member (18), so that the contact between this contact zone (40) and the supply member (18) is a surface contact.

3. The collection device (12) according to any of the preceding claims, **characterized in that** the collector (16) comprises a plate (32) to which the contacts (34) are secured, the contacts (34) being situated on the same side of the plate and each comprising a metal profile folded into a C shape, with two rounded portions (36) of the C in the shape of an arc of a circle, the rounded portions are connected to one another by the corresponding blade (38) on the one hand and to the plate (32) on the other hand, so that in the retracted configuration of the collection device (12), a contact plane (P40) in which the contact areas (40) of the blades (38) are located is parallel to the plate (32).

4. The collection device (12) according to any of the preceding claims, **characterized in that** the contacts (34) are made of copper alloy, preferably phosphor bronze.

5. The collection device (12) according to any one of the preceding claims, **characterized in that** the collector (16) comprises between eight and sixteen contacts (34), preferably between ten and fourteen contacts, more preferably twelve contacts.

6. The collection device (12) according to any one of the preceding claims, **characterized in that** the collection device further comprises an actuator (30) which is configured to control the movements of the collector (16) between the positions away from or close to the base (14).

7. The collection device (12) according to the preceding claim, **characterized in that** the actuator (30) is provided with a regulation device configured so that, in the extended configuration of the collection device, the intensity of the force exerted by the collector (16) on the supply member (18) is equal to a set value.

8. The collection device (12) according to the preceding claim, **characterized in that** the set value is between 150 N and 350 N, preferably between 200 N and 300 N, still more preferably substantially equal to 250 N.

9. A vehicle (2), in particular a railway vehicle, comprising a device (12) for collecting electrical energy and an energy storage device electrically connected to the collection device, **characterized in that** the collection device (12) is according to any one of the preceding claims.

10. The vehicle (2), in particular a railway vehicle, according to the preceding claim, **characterized in that** the vehicle is intended to stop at a station (17) where the supply member (18) is located above the vehicle, the collection device (12) being secured to the body (6) of the vehicle and being located between a roof (10) of the vehicle and the supply member (18) when the vehicle is stopped at the station.
